# EUROPÄISCHE PATENTSCHRIFT

(11) **EP 2 219 913 B1**
(45) Veröffentlichungstag und Bekanntmachung des Hinweises auf die Patenterteilung: **07.12.2011**
(21) Anmeldenummer: 08804594.3
(22) Anmeldetag: 23.09.2008
(51) Int. Cl.: B60T 8/36, F16K 31/06

(54) **VENTILPATRONE FÜR EIN MAGNETVENTIL UND ZUGEHÖRIGES MAGNETVENTIL**
VALVE CARTRIDGE FOR A SOLENOID VALVE, AND ASSOCIATED SOLENOID VALVE
CARTOUCHE POUR ÉLECTROVANNE ET ÉLECTROVANNE CORRESPONDANTE

(30) Priorität: 08.11.2007 DE 102007053134
(43) Veröffentlichungstag der Anmeldung: 25.08.2010
(73) Patentinhaber: Robert Bosch GmbH, 70442 Stuttgart (DE)
(72) Erfinder: HEYER, Klaus, 71691 Freiberg (DE); FINK, Reinhard, 74321 Bietigheim-Bissingen (DE); RICHTER, Florian, 71282 Hemmingen (DE); PIC, Jean-Guillaume, 74223 Flein (DE); BRENNDOERFER, Daniel, 74388 Talheim (DE); WETSCHOREK, Volkmar, 88260 Argenbuehl (DE); SPEER, Harald, 71691 Freiberg (DE); RISPLER, Florian, A-6992 Hirschegg (AT); HOLZ, Oliver, 72657 Altenriet (DE); MUELLER, Friedrich, 87509 Immenstadt (DE); HOUIS, Nicolas, 74321 Bietigheim-Bissingen (DE); FRITZ, Anton, 87527 Ofterschwang (DE); SCHACHERL, Alice, 87545 Burgberg (DE); NEUHAUSER, Franz, 87538 Bolsterlang (DE); RAPP, Hubert, 87527 Sonthofen (DE); HAAS, Martin, 71720 Oberstenfeld (DE); KASPER, Christoph, Charleston, 29418 (US); FRICKE-SCHMIDT, Joerg, 74078 Heilbronn (DE); SCHNALZGER, Guenther, 87544 Blaichach (DE); KIRSCHNER, Martin, 87544 Blaichach (DE); VIER, Elmar, 71691 Freiberg a. N. (DE); EICHMANN, Stefan, 87437 Kempten (DE); KOLARSKY, Jens, 74321 Bietigheim/Bissingen (DE); STOKMAIER, Gerhard, 71706 Markgroeningen (DE); KRATZER, Dietmar, 71732 Tamm (DE); MUELLER, Kurt, 87527 Sonthofen (DE)
(86) Internationale Anmeldenummer: PCT/EP2008/062676
(87) Internationale Veröffentlichungsnummer: WO 2009/059845

(56) Entgegenhaltungen:
- WO-A-98/09855
- WO-A-2005/012055
- WO-A-2008/058803
- DE-A1-102006 003 490

## Beschreibung

### Stand der Technik

Die Erfindung betrifft eine Ventilpatrone für ein Magnetventil nach der Gattung des unabhängigen Patentanspruchs 1, und ein zugehöriges Magnetventil.

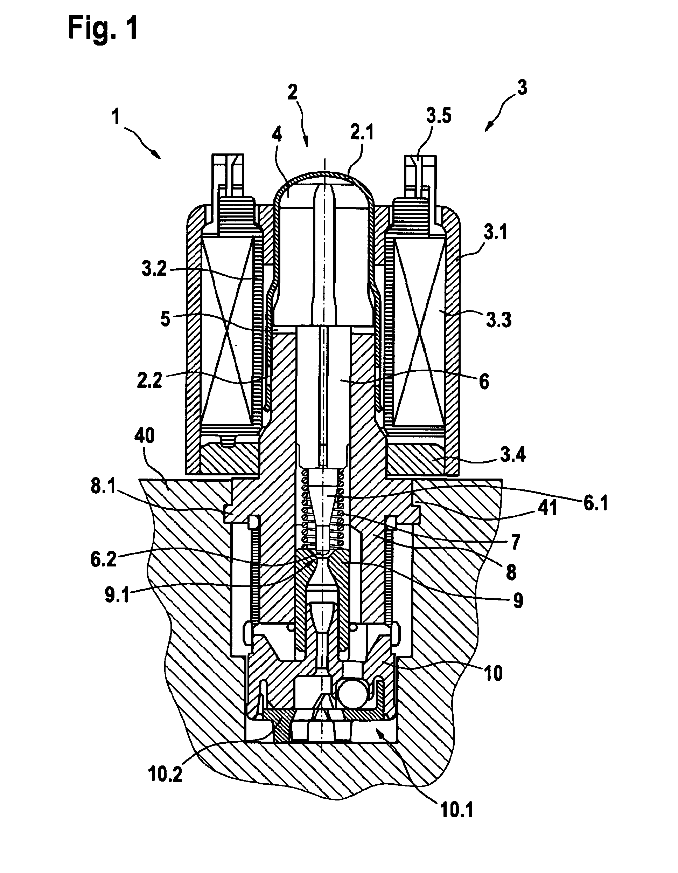

Ein herkömmliches Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist in Figur 1 dargestellt. Wie aus Figur 1 ersichtlich ist, umfasst das herkömmliche Magnetventil 1, das beispielsweise als stromlos offenes Regelventil ausgeführt ist, eine Magnetbaugruppe 3 zur Erzeugung eines Magnetflusses, die einen Gehäusemantel 3.1, einen Wicklungsträger 3.2, eine Spulenwicklung 3.3 und eine Abdeckscheibe 3.4 umfasst, und eine Ventilpatrone 2, die eine Kapsel 2.1, einen mit einem ersten Ende in die Kapsel 2.1 eingeschobenen Ventileinsatz 8, einen Magnetanker 4 mit einem Stößel 6 und eine Rückstellfeder 7 umfasst. Bei der Herstellung des herkömmlichen Magnetventils 1 werden die Kapsel 2.1 und der Ventileinsatz 8 der Ventilpatrone 2 durch Pressen aufeinander gefügt und durch eine Dichtschweißung 2.2 wird die Ventilpatrone 2 hydraulisch gegenüber der Atmosphäre abgedichtet. Zusätzlich nimmt der Ventileinsatz 8 die im hydraulischen System auftretenden Druckkräfte auf und leitet diese über einen Verstemmflansch 8.1 an einen Verstemmbereich 41 eines Fluidblocks 40 weiter.

Die Magnetbaugruppe 3 erzeugt durch eine Bestromung der Spulenwicklung 3.3 über elektrischen Anschlüsse 3.5 eine Magnetkraft, die den längsbeweglichen Magnetanker 4 mit dem Stößel 6, der ein Schließelement 6.1 mit einem Hauptdichtelement 6.2 umfasst, entgegen der Kraft der Rückstellfeder 7 gegen den Ventileinsatz 8 bewegt, wobei der Stößel 6 und die Rückstellfeder 7 in einer Innenbohrung des Ventileinsatzes 2 geführt sind.

Der Ventileinsatz 8 leitet den von der Magnetbaugruppe 3 über die Abdeckscheibe 3.4 eingeleiteten Magnetfluss axial über einen Luftspalt 5 in Richtung Magnetanker 4. Zudem nimmt der Ventileinsatz 8 an einem zweiten Ende den so genannten Ventilkörper 9 auf, der einen Hauptventilsitz 9.1 umfasst, in welchen das als Dichtkalotte ausgeführte Hauptdichtelement 6.2 dichtend eintaucht, um die Dichtfunktion des Magnetventils 1 umzusetzen.

Wie weiter aus Figur 1 ersichtlich ist, wird an den Ventileinsatz 8 axial ein Ventilunterteil 10 angelegt und abgestützt, das ein exzentrisch zur Ventilhauptachse angeordnetes Rückschlagventil 10.1 umfasst. Das beispielsweise als Kunststoffeinsatz ausgeführte Ventilunterteil 10 dient zusätzlich zur Abdichtung zum umgebenden Fluidblock 40, zur Abdichtung zum Ventilkörper 9 und zur Aufnahme eines Flachfilters 10.2.

In der Offenlegungsschrift DE 10 2006 003 490 A1 wird ein Magnetventil beschrieben, welches eine Magnetbaugruppe, eine Kapsel, einen in die Kapsel eingeschobenen Ventileinsatz und einen in einer Innenbohrung des Ventileinsatzes beweglich geführten Stößel umfasst. Der Ventileinsatz des beschriebenen Magnetventils ist aus mindestens zwei Segmenten aufgebaut, welche im zusammengesetzten Zustand die Innenbohrung zur Führung des Stößels bilden und einen Magnetfluss der Magnetbaugruppe leiten. Zudem ist die Kapsel mit einer Ventilbuchse an einem Verstemmbereich mit einem Fluidblock verstemmt, wobei eine Hülse mit einem Dichtsitz so in die Kapsel eingefügt ist, dass der Dichtsitz außerhalb des Ventileinsatzes angeordnet ist.

Des Weiteren wird in der Offenlegungsschrift DE 10 2005 044 672 A1 ein Magnetventil beschrieben, welches eine Magnetbaugruppe, eine Kapsel, einen Anker und einen Ventileinsatz umfasst, der einen von der Magnetbaugruppe eingeleiteten Magnetfluss axial über einen Luftspalt in Richtung Anker leitet. Die Kapsel weist einen unteren Bereich auf, der überlappend auf den Ventileinsatz geschoben ist. Der Überlappungsbereich der Kapsel des beschriebenen Magnetventils ist in Richtung eines Verstemmbereichs verlängert, an dem die Kapsel mit einer Ventilbuchse mit einem Fluidblock verstemmt ist. Zudem ist eine Hülse mit einem Dichtsitz so in die Kapsel eingefügt, dass der Dichtsitz außerhalb des Ventileinsatzes angeordnet ist.

### Offenbarung der Erfindung

Die erfindungsgemäße Ventilpatrone für ein Magnetventil mit den Merkmalen des unabhängigen Patentanspruchs 1 hat demgegenüber den Vorteil, dass ein Ventileinsatz als einteilige über ihre gesamte axiale Länge geschlitzte Hülse ausgeführt ist, und ein Ventilkörper als haubenförmige Hülse ausgeführt ist, wobei der als Hülse ausgeführte Ventilköper so in ein zweites Ende des als geschlitzte Hülse ausgeführten Ventileinsatzes eingepresst ist, dass der Hauptventilsitz innerhalb des Ventileinsatzes angeordnet ist. Dadurch können der Ventileinsatz und der Ventilkörper in vorteilhafter Weise durch kostengünstige Herstellungsverfahren bei konstant bleibender Leistungsfähigkeit der Ventilpatrone verwendet werden. So kann der als einteilige über ihre gesamte axiale Länge geschlitzte Hülse ausgeführte Ventileinsatz beispielsweise durch Einrollen eines Blechstreifens hergestellt werden, und der Ventilkörper kann beispielsweise als haubenförmiges Tiefziehteil hergestellt werden.

Durch die in den abhängigen Ansprüchen aufgeführten Maßnahmen und Weiterbildungen sind vorteilhafte Verbesserungen der im unabhängigen Patentanspruch angegebenen Ventilpatrone möglich.

Besonders vorteilhaft ist, dass eine Kapsel der Ventilpatrone als zur Atmosphäre dichtendes Ventilbauteil ausgeführt ist und über eine Verstemmbuchse an einem Verstemmbereich mit einem Fluidblock verstemmbar ist. Dadurch übernimmt die Kapsel auch die Dichtfunktion ab der Verstemmung der Ventilpatrone im Fluidblock. Da die Kapsel auch die Dichtfunktion nach außen vom Ventileinsatz übernimmt, kann die Ventilmontage in vorteilhafter Weise vereinfacht werden, so dass eine Dichtschweißung zwischen der Kapsel und dem Ventileinsatz nicht mehr erforderlich ist.

In Ausgestaltung der erfindungsgemäßen Ventilpatrone kann eine spätere Form einer Innenbohrung des Ventileinsatzes vor dem Einrollen in eine korrespondierende Oberfläche des Blechstreifens eingebracht werden. Dies ermöglicht, dass beliebige günstige Formen für eine Volumenausgleichsnut durch einfache Bearbeitung der korrespondierenden Oberfläche des Blechstreifens vor dem Einrollen eingearbeitet werden können. So kann die korrespondierende Oberfläche des Blechstreifens beispielsweise so bearbeitet werden, dass die Innenbohrung des Ventileinsatzes nach dem Einrollen des den Ventileinsatz bildenden Blechstreifens eine Innenverzahnung mit einer vorgebbaren Anzahl von Zähnen und/oder mit einer vorgebbaren Zahnform oder eine vorgebbare Anzahl von Kanten aufweist. Der als Tiefziehteil ausgeführte Ventilkörper ist beispielsweise an einem Einpressbereich in den Ventileinsatz eingepresst, wobei der Hauptventilsitz im Ventilkörper über einen Entkoppelbereich, der beispielsweise einen abnehmenden Außendurchmesser aufweist, vom Einpressbereich entkoppelt ist. Durch die Entkopplung des Hauptventilsitzes vom Einpressbereich kann in vorteilhafter Weise eine Verformung des Hauptventilsitzes durch den Einpressvorgang verhindert werden.

In weiterer Ausgestaltung der erfindungsgemäßen Ventilpatrone ist eine Rückstellfeder für einen Stößel außerhalb des Strömungsbereichs angeordnet, wobei sich die Rückstellfeder auf einer Federauflage abstützt. Die Federauflage kann beispielsweise als in den Ventileinsatz eingeführte Spannhülse oder als angeformter Vorsprung ausgeführt werden, der einen wirksamen Durchmesser der Innenbohrung des Ventileinsatzes einschnürt. Zudem kann ein Ventilunterteil über einen Dom dichtend in einen Innenraum des Ventilkörpers eingeschoben werden und mit einer Außenkontur gegen den umgebenden Fluidblock abdichten.

In weiterer Ausgestaltung der erfindungsgemäßen Ventilpatrone wird ein maximaler Hub des Stößels durch ein axiales Verschieben des Ventileinsatzes innerhalb der Kapsel eingestellt. Zudem wird ein minimaler Luftspalt zwischen dem Anker und dem Ventileinsatz durch axiales Verschieben des Ventilkörpers innerhalb des Ventileinsatzes mit eingelegtem Anker eingestellt. Des Weiteren kann der eingestellte Luftspalt durch eine Crimpverbindung zwischen der Kapsel und dem Ventileinsatz festgelegt werden. Zur Herstellung der Crimpverbindung ist der Ventileinsatz beispielsweise mit einer umlaufenden Nut ausgeführt.

In weiterer Ausgestaltung der erfindungsgemäßen Ventilpatrone ist um das zweite Ende des Ventileinsatzes ein Armierungsring aufgepresst, um eine Gestaltfestigkeit des Ventileinsatzes beim Einpressen des Ventilkörpers zu vergrößern. Alternativ können die Stöße des als geschlitzte Hülse ausführten Ventileinsatzes mindestens am zweiten Ende des Ventileinsatzes miteinander verbunden werden, um die Gestaltfestigkeit des Ventileinsatzes beim Einpressen des Ventilkörpers zu vergrößern. Die Stöße des als geschlitzte Hülse ausführten Ventileinsatzes können beispielsweise durch Schweißen und/oder Kleben und/oder Verzahnen miteinander verbunden werden.

Die erfindungsgemäße Ventilpatrone kann beispielsweise in stromlos offenen oder geschlossenen Magnetventilen verwendet werden.

Vorteilhafte, nachfolgend beschriebene Ausführungsformen der Erfindung sowie die zu deren besserem Verständnis oben erläuterten, herkömmlichen Ausführungsbeispiele sind in den Zeichnungen dargestellt. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Schnittdarstellung eines herkömmlichen Magnetventils.
Fig. 2 zeigt eine schematische Schnittdarstellung eines Ausführungsbeispiels einer erfindungsgemäßen Ventilpatrone für ein Magnetventil.
Fig. 3 zeigt eine schematische Schnittdarstellung eines ersten Ausführungsbeispiels eines Ventileinsatzes für die Ventilpatrone gemäß Fig. 2.
Fig. 4 zeigt eine schematische Schnittdarstellung eines Ventilkörpers für die Ventilpatrone gemäß Fig. 2.
Fig. 5 zeigt eine schematische Schnittdarstellung einer Spannhülse für den Ventileinsatz gemäß Fig. 3.
Fig. 6 zeigt eine schematische Schnittdarstellung eines zweiten Ausführungsbeispiels eines Ventileinsatzes für die Ventilpatrone gemäß Fig. 2.

### Ausführungsformen der Erfindung

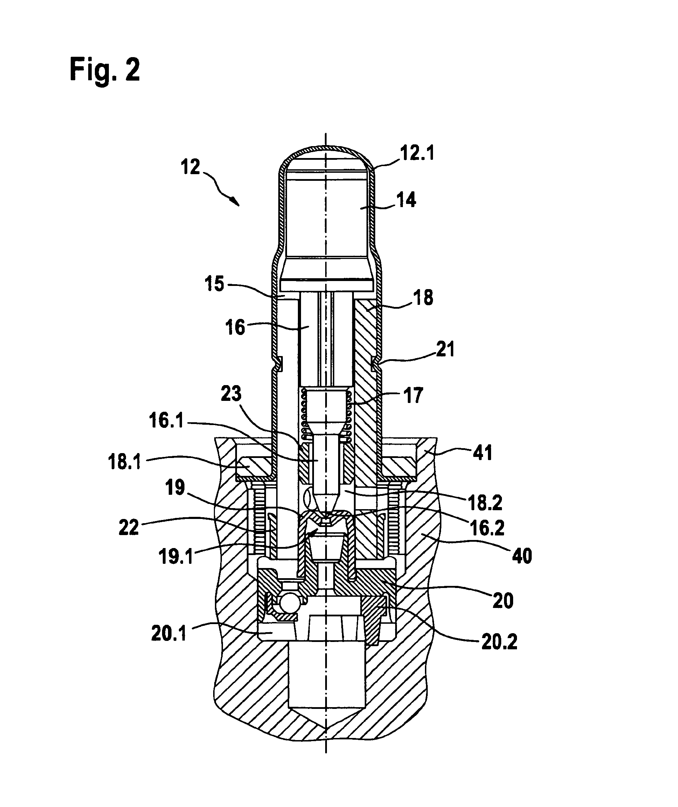

Wie aus Fig. 2 bis 4 ersichtlich ist, umfasst ein Ausführungsbeispiel einer erfindungsgemäßen Ventilpatrone 12 für ein Magnetventil eine Kapsel 12.1, einen innerhalb der Kapsel 12.1 beweglich geführten Magnetanker 14, einen Ventileinsatz 18, der mit einem ersten Ende in die Kapsel 12.1 eingeschoben ist, und einen Ventilkörper 19 mit einem Hauptventilsitz 19.1. Innerhalb des Ventileinsatzes 18 ist ein Stößel 6 längsbeweglich geführt, der ein Schließelement 6.1 mit einem Dichtelement 6.2 aufweist, das zur Ausführung einer Dichtfunktion dichtend in den Hauptventilsitz 19.1 des Ventilkörpers 19 eintaucht. Der Stößel 6 kann von dem Magnetanker 14 gegen die Kraft einer Rückstellfeder 17 innerhalb des Ventileinsatzes 18 bewegt werden, wobei der Magnetanker 14 von einer Magnetkraft bewegt wird, die von einer nicht dargestellten Magnetbaugruppe erzeugt wird. Die Magnetbaugruppe kann beispielsweise analog zur Magnetbaugruppe 3 des herkömmlichen Magnetventils 1 gemäß Fig. 1 ausgeführt werden.

Wie aus Fig. 2 weiter ersichtlich ist, ist die Kapsel 12.1 als zur Atmosphäre hin dichtendes Ventilbauteil in Richtung Verstemmbereich 41 mit einem Fluidblock 40 verlängert ausgeführt. Daher werden die Verstemmkräfte nicht mehr vom Ventileinsatz 18, sondern von einer Verstemmbuchse 18.1 aufgenommen. Die Verstemmgeometrie wird so weit optimiert, dass ein Verstemmprozess eingeführt werden kann, der eine reduzierte Verstemmkraft zulässt; dadurch können die Verformungskräfte reduziert werden, die auf die Verstemmbuchse 18.1 und die Kapsel 12.1 einwirken.

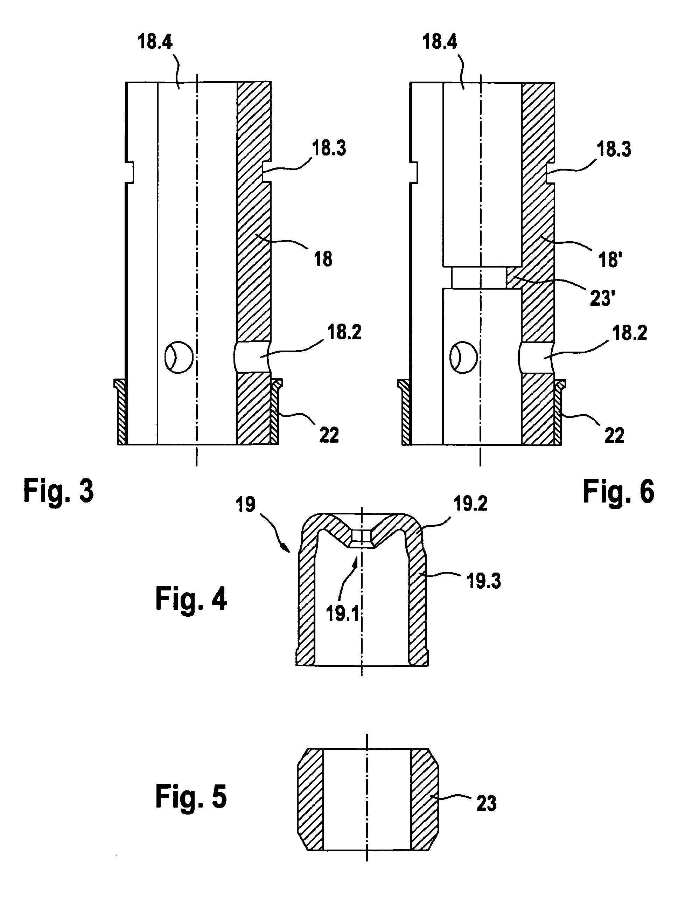

Wie aus Fig. 2 und 3 weiter ersichtlich ist, ist der Ventileinsatz 18 als einteilige geschlitzte Hülse ausgeführt. Der als einteilige geschlitzte Hülse ausgeführte Ventileinsatz 18 kann beispielsweise durch Einrollen eines Blechstreifens hergestellt werden. Im dargestellten Ausführungsbeispiel weist eine Innenbohrung des Ventileinsatzes 18 eine vollkommene oder sehr stark angenäherte Kreisform auf, in welcher der Stößel 16 geführt wird. Zum Ausgleich des Volumens, das der Stößel 16 bei seiner durch den von der Magnetbaugruppe eingeleiteten Magnetfluss bewirkten Axialbewegung verdrängt, und zur Entlüftung bzw. Befüllung, ist in den Stößel 16 mindestens eine axial verlaufende Volumenausgleichsnut eingearbeitet. Alternativ kann die mindestens eine Volumenausgleichsnut jedoch auch in die Innenbohrung des Ventileinsatzes 18 eingearbeitet werden. Bei einer alternativen nicht dargestellten Ausführungsform der erfindungsgemäßen Ventilpatrone kann beispielsweise mindestens eine axial verlaufende Volumenausgleichsnut in den Ventileinsatz 18 eingearbeitet und durch die Form der Innenbohrung des Ventileinsatzes vorgegeben werden. Die spätere Form der Innenbohrung des Ventileinsatzes 18 kann beispielsweise vor dem Einrollen in eine korrespondierende Oberfläche des Blechstreifens eingebracht werden. Die axial verlaufenden Volumenausgleichsnuten können beispielsweise durch Einarbeiten einer Innenverzahnung in die Innenbohrung des Ventileinsatzes 18 erzeugt werden. Die Innenverzahnung kann eine beliebig vorgebbare Anzahl von Zähnen und/oder eine beliebig vorgebbare Zahnform aufweisen. Hierbei wird die Innenverzahnung vor dem Einrollen in eine korrespondierende Oberfläche des Blechstreifens eingearbeitet, so dass die Innenbohrung des Ventileinsatzes 18 mit der gewünschten Innenverzahnung nach dem Einrollen des Blechstreifens entsteht. Alternativ können die axial verlaufenden Volumenausgleichsnuten durch Einarbeiten von mehreren Kanten in die Innenbohrung des Ventileinsatzes 18 erzeugt werden. Hierbei werden die Kanten vor dem Einrollen in eine korrespondierende Oberfläche des Blechstreifens eingearbeitet, so dass die Innenbohrung des Ventileinsatzes 18 nach dem Einrollen des Blechstreifens die gewünschte Form eines Innen-Mehrkants bzw. eines Innen-Gleichdicks aufweist.

Wie aus Fig. 2 und 4 weiter ersichtlich ist, ist der Ventilkörper 19 als haubenförmige Hülse ausgeführt. Der als Hülse ausgeführte Ventilköper 19 ist beispielsweise als Tiefziehteil ausgeführt und wird über einem Einpressbereich 19.3 so in ein zweites Ende des als geschlitzte Hülse ausgeführten Ventileinsatzes 18 eingepresst, dass der Hauptventilsitz 19.1 innerhalb des Ventileinsatzes 18 angeordnet ist. Über einen Entkoppelbereich 19.2 ist der Hauptventilsitz 19.1 im Ventilkörper 19 vom Einpressbereich (19.3) entkoppelt, um eine Verformung des Hauptventilsitzes 19.1 durch den Einpressvorgang des Ventilkörpers 19 in den Ventileinsatz 18 zu verhindern. Wie aus Fig. 4 weiter ersichtlich ist, verjüngt sich der Außendurchmesser des Entkoppelbereichs 19.2 ausgehend vom Durchmesser des Einpressbereichs 19.3 in Richtung des haubenförmigen Endes des Ventilkörpers 19 mit dem Hauptventilsitz 19.1.

Die hydraulischen Kräfte werden von dem als geschlitzte Hülse ausgeführten Ventileinsatz 18 aufgenommen. Um ein Aufweiten des Ventileinsatzes 18 durch das Einpressen des Ventilkörpers 19 zu verhindern, ist im dargestellten Ausführungsbeispiel ein Armierungsring 22 auf das zweite Ende des Ventileinsatzes 18 aufgepresst. Der aufgepresste Armierungsring 22 vergrößert in vorteilhafter Weise die Gestaltfestigkeit des Ventileinsatzes 18 beim Einpressen des Ventilkörpers 19. Bei einer alternativen nicht dargestellten Ausführungsform der erfindungsgemäßen Ventilpatrone 12 können die Stöße des als geschlitzte Hülse ausführten Ventileinsatzes 18 mindestens am zweiten Ende des Ventileinsatzes 18 miteinander verbunden werden, um die Gestaltfestigkeit des Ventileinsatzes 18 beim Einpressen des Ventilkörpers 19 zu vergrößern. Die Stöße des als geschlitzte Hülse ausführten Ventileinsatzes 18 können beispielsweise durch Schweißen und/oder Kleben und/oder Verzahnen miteinander verbunden werden.

Im dargestellten Ausführungsbeispiel der erfindungsgemäßen Ventilpatrone kann ein maximaler Hub des Stößels 16 durch ein axiales Verschieben des Ventileinsatzes 18 innerhalb der Kapsel 12.1 eingestellt werden. Ein minimaler Luftspalt 15 zwischen dem Magnetanker 14 und dem Ventileinsatz 18 kann durch axiales Verschieben des Ventilkörpers 19 innerhalb des Ventileinsatzes 18 mit eingelegtem Anker 14 eingestellt werden. Der eingestellte Luftspalt 15 kann durch eine Crimpverbindung 21 zwischen der Kapsel 12.1 und dem Ventileinsatz 18 festgelegt werden, wobei der Ventileinsatz 18 zur Herstellung der Crimpverbindung 21 mit einer umlaufenden Nut 18.3 ausgeführt werden kann. Somit wird durch die Crimpverbindung 21 sichergestellt, dass der Arbeitsluftspalt 15 erhalten bleibt, wobei zusätzlich die hydraulisch wirkenden Kräfte aufgenommen werden können. Die Form der umlaufenden Nut 18.3 kann zur Erhöhung der axialen Haltekräfte der Crimpverbindung zwischen Kapsel 12.1 und Ventileinsatz 18 geometrisch verändert und angepasst werden.

Wie aus Fig. 2 weiter ersichtlich ist, ist die Rückstellfeder 17 für den Stößel 16 außerhalb des Strömungsbereichs angeordnet, wobei sich die Rückstellfeder 17 auf einer Federauflage 23 abstützt, die im dargestellten Ausführungsbeispiel als in den Ventileinsatz 18 eingeführte Spannhülse ausgeführt ist, die in Fig. 5 dargestellt ist. Durch die Verlegung der Rückstellfeder 17 aus dem durchströmten Bauraum können der Verschleiß am Stößel 16 reduziert und der Durchfluss zwischen dem Hauptventilsitz 19.1 und entsprechenden in den Ventileinsatz 18 eingebrachten Radialbohrungen 18.2 erhöht werden.

Alternativ kann, wie aus Fig. 6 ersichtlich ist, die Federauflage als angeformter Vorsprung 23' ausgeführt werden, der einen wirksamen Durchmesser der Innenbohrung 18.4 des Ventileinsatzes 18' einschnürt. Die als Vorsprung ausgeführte Federauflage 23' des Ventileinsatzes 18 kann beispielsweise vor dem Einrollen in eine korrespondierende Oberfläche des Blechstreifens angeformt werden. Die angeformte Federauflage 23' kann beispielsweise als hervorstehender Quersteg oder als mehrere hervorstehende Nasen ausgebildet werden.

Wie weiter aus Figur 2 ersichtlich ist, ist ein als Kunststoffeinsatz ausgeführtes Ventilunterteil 20 axial an den Ventileinsatz 18 angelegt und abgestützt, wobei das Ventilunterteil 20 über einen Dom dichtend in einen Innenraum des Ventilkörpers 19 eingeschoben ist und mit der Außenkontur gegen den umgebenden Fluidblock 40 abdichtet. Zudem umfasst das dargestellte Ventilunterteil 20 ein exzentrisch angeordnetes Rückschlagventil 20.1, das eine richtungsorientierte Durchflussfunktion ausführt. Zusätzlich nimmt das Ventilunterteil 20 einen Flachfilter 20.2 auf.

Durch die erfindungsgemäße Ventilpatrone können einzelne Komponenten stark vereinfacht werden, so dass in vorteilhafter Weise auch die korrespondierenden Herstellprozesse vereinfacht und kostengünstiger ausgeführt werden können. Zudem kann sich durch die Hülsenbauweise der erfindungsgemäßen Ventilpatrone in vorteilhafter Weise eine verringerte Bauhöhe des Magnetventils über dem Fluidblock ergeben, was sich positiv auf das Aggregatboxvolumen auswirken kann. Des Weiteren kann sich auch innerhalb des Fluidblocks eine verringerte Bauhöhe des Magnetventils ergeben, wodurch die Dicke des Fluidblocks verringert werden kann, so dass sich weitere Vorteile im Bezug auf das Gewicht und das Aggregatboxvolumen ergeben können.

## Patentansprüche

1. Ventilpatrone (12) für ein Magnetventil mit einer Kapsel (12.1), einem innerhalb der Kapsel (12.1) beweglich geführten Magnetanker (14), einem Ventileinsatz (18, 18'), der mit einem ersten Ende in die Kapsel (12.1) eingeschoben ist, und einem Ventilkörper (19) mit einem Hauptventilsitz (19.1), wobei der von einer erzeugten Magnetkraft bewegte Magnetanker (14) einen innerhalb des Ventileinsatzes (18, 18') geführten Stößel (16) bewegt, der ein Schließelement (16.1) mit einem Dichtelement (16.2) aufweist, und wobei das Dichtelement (16.2) zur Ausführung einer Dichtfunktion dichtend in den Hauptventilsitz (19.1) des Ventilkörpers (19) eintaucht, **dadurch gekennzeichnet, dass** der Ventileinsatz (18, 18') als einteilige über ihre gesamte axiale Länge geschlitzte Hülse ausgeführt ist, und der Ventilkörper (19) als haubenförmige Hülse ausgeführt ist, wobei der als Hülse ausgeführte Ventilköper (19) so in ein zweites Ende des als geschlitzte Hülse ausgeführten Ventileinsatzes (18, 18') eingepresst ist, dass der Hauptventilsitz (19.1) innerhalb des Ventileinsatzes (18, 18') angeordnet ist.

2. Ventilpatrone nach Anspruch 1, **dadurch gekennzeichnet, dass** die Kapsel (12.1) als zur Atmosphäre dichtendes Ventilbauteil ausgeführt ist und über eine Verstemmbuchse (18.1) an einem Verstemmbereich (41) mit einem Fluidblock (40) verstemmbar ist.

3. Ventilpatrone nach Anspruch 1 oder 2, **dadurch gekennzeichnet, dass** der Ventilkörper (19) als Tiefziehteil ausgeführt und an einem Einpressbereich (19.3) in den Ventileinsatz (18, 18') eingepresst ist, wobei der Hauptventilsitz (19.1) im Ventilkörper (19) über einen Entkoppelbereich (19.2) vom Einpressbereich (19.3) entkoppelt ist.

4. Ventilpatrone nach einem der Ansprüche 1 bis 3, **dadurch gekennzeichnet, dass** eine Rückstellfeder (17) des Stößels (16) außerhalb des Strömungsbereichs angeordnet ist, wobei sich die Rückstellfeder (17) auf einer Federauflage (23, 23') abstützt.

5. Ventilpatrone nach Anspruch 4, **dadurch gekennzeichnet, dass** die Federauflage als Spannhülse (23) ausgeführt ist, die in den Ventileinsatz (18) eingeführt ist.

6. Ventilpatrone nach Anspruch 4, **dadurch gekennzeichnet, dass** die Federauflage als angeformter Vorsprung (23') ausgeführt ist, der einen wirksamen Durchmesser der Innenbohrung (18.4) des Ventileinsatzes (18') einschnürt.

7. Ventilpatrone nach einem der Ansprüche 1 bis 6, **dadurch gekennzeichnet, dass** ein Ventilunterteil (20) axial an den Ventileinsatz (18, 18') angelegt und abgestützt ist, wobei das Ventilunterteil (20) über einen Dom dichtend in einen Innenraum des Ventilkörpers (19) eingeschoben ist und mit der Außenkontur gegen den umgebenden Fluidblock (40) abdichtet.

8. Ventilpatrone nach einem der Ansprüche 1 bis 7, **dadurch gekennzeichnet, dass** ein maximaler Hub des Stößels (16) durch ein axiales Verschieben des Ventileinsatzes (18, 18') innerhalb der Kapsel (12.1) einstellbar ist.

9. Ventilpatrone nach einem der Ansprüche 1 bis 8, **dadurch gekennzeichnet, dass** ein minimaler Luftspalt (15) zwischen dem Anker (14) und dem Ventileinsatz (18, 18') durch axiales Verschieben des Ventilkörpers (19) innerhalb des Ventileinsatzes (18, 18') mit eingelegtem Anker (14) einstellbar ist.

10. Ventilpatrone nach Anspruch 9, **dadurch gekennzeichnet, dass** der eingestellte Luftspalt (15) durch eine Crimpverbindung (21) zwischen der Kapsel (12.1) und dem Ventileinsatz (18, 18') festgelegt ist.

11. Ventilpatrone nach Anspruch 10, **dadurch gekennzeichnet, dass** der Ventileinsatz (18, 18') zur Herstellung der Crimpverbindung (21) mit einer umlaufenden Nut (18.3) ausgeführt ist.

12. Ventilpatrone nach einem der Ansprüche 1 bis 11, **dadurch gekennzeichnet, dass** um das zweite Ende des Ventileinsatzes (18, 18') ein Armierungsring (22) aufgepresst ist, um eine Gestaltfestigkeit des Ventileinsatzes (18, 18') beim Einpressen des Ventilkörpers (19) zu vergrößern.

13. Ventilpatrone nach einem der Ansprüche 1 bis 11, **dadurch gekennzeichnet, dass** die Stöße des als geschlitzte Hülse ausführten Ventileinsatzes (18, 18') mindestens am zweiten Ende des Ventileinsatzes (18, 18') miteinander verbunden sind, um eine Gestaltfestigkeit des Ventileinsatzes (18, 18') beim Einpressen des Ventilkörpers (19) zu vergrößern.

14. Ventilpatrone nach Anspruch 13, **dadurch gekennzeichnet, dass** die Stöße des als geschlitzte Hülse ausführten Ventileinsatzes (18, 18') durch Schweißen und/oder Kleben und/oder Verzahnen miteinander verbunden sind.

15. Magnetventil **gekennzeichnet durch** eine Ventilpatrone (12) nach einem der Ansprüche 1 bis 14.

16. Verfahren zur Herstellung des Ventileinsatzes (18, 18') der Ventilpatrone (12) nach vorliegendem Anspruch 1, **dadurch gekennzeichnet, dass** der Ventileinsatz (18, 18') durch Einrollen eines Blechstreifens als einteilige über ihre gesamte axiale Länge geschlitzte Hülse hergestellt wird.

17. Verfahren nach Anspruch 16, **dadurch gekennzeichnet, dass** eine spätere Form einer Innenbohrung (18.4) des Ventileinsatzes (18, 18') vor dem Einrollen in eine korrespondierende Oberfläche des Blechstreifens eingebracht wird.

## Claims

1. Valve cartridge (12) for a solenoid valve having a capsule (12.1), a magnet armature (14) which is guided in a movable fashion within the capsule (12.1), a valve insert (18, 18'), which is inserted by a first end into the capsule (12.1), and a valve body (19) with a main valve seat (19.1), wherein the magnet armature (14) which is moved by a magnetic force which is generated moves a plunger (16) which is guided within the valve insert (18, 18') and which has a closing element (16.1) with a sealing element (16.2), and wherein, in order to carry out a sealing function, the sealing element (16.2) dips in a seal-forming fashion into the main valve seat (19.1) of the valve body (19), **characterized in that** the valve insert (18, 18') is embodied as a single-component sleeve which is slotted over its entire axial length, and the valve body (19) is embodied as a hood-shaped sleeve, wherein the valve body (19) which is embodied as a sleeve is pressed into a second end of the valve insert (18, 18') which is embodied as a slotted sleeve, in such a way that the main valve seat (19.1) is arranged within the valve insert (18, 18').

2. Valve cartridge according to Claim 1, **characterized in that** the capsule (12.1) is embodied as a valve component which forms a seal with respect to the atmosphere and can be caulked to a fluid block (40) by means of a caulking bushing (18.1) at a caulking region (41).

3. Valve cartridge according to Claim 1 or 2, **characterized in that** the valve body (19) is embodied as a deep-drawn part and is pressed in at a press-in region (19.3) into the valve insert (18, 18'), wherein the main valve seat (19.1) in the valve body (19) is decoupled from the press-in region (19.3) by means of a decoupling region (19.2).

4. Valve cartridge according to one of Claims 1 to 3, **characterized in that** a restoring spring (17) of the plunger (16) is arranged outside the flow region, wherein the restoring spring (17) is supported on a spring support (23, 23').

5. Valve cartridge according to Claim 4, **characterized in that** the spring support is embodied as a clamping sleeve (23) which is introduced into the valve insert (18).

6. Valve cartridge according to Claim 4, **characterized in that** the spring support is embodied as an integrally formed-on projection (23') which constricts an effective diameter of the inner drill hole (18.4) in the valve insert (18').

7. Valve cartridge according to one of Claims 1 to 6, **characterized in that** a valve lower part (20) is positioned axially against the valve insert (18, 18') and supported thereon, wherein the valve lower part (20) is inserted by means of a dome in a seal-forming fashion into an interior space in the valve body (19) and forms a seal with the external contour against the surrounding fluid block (40).

8. Valve cartridge according to one of Claims 1 to 7, **characterized in that** a maximum stroke of the plunger (16) can be set by axially displacing the valve insert (18, 18') within the capsule (12.1).

9. Valve cartridge according to one of Claims 1 to 8, **characterized in that** a minimum air gap (15) can be set between the armature (14) and the valve insert (18, 18') by axially displacing the valve body (19) within the valve insert (18, 18') with the armature (14) inserted.

10. Valve cartridge according to Claim 9, **characterized in that** the air gap (15) which is set is defined by a crimp connection (21) between the capsule (12.1) and the valve insert (18, 18').

11. Valve cartridge according to Claim 10, **characterized in that** the valve insert (18, 18') is designed to produce the crimp connection (21) with a circumferential groove (18.3).

12. Valve cartridge according to one of Claims 1 to 11, **characterized in that** a reinforcing ring (22) is pressed on around the second end of the valve insert (18, 18') in order to increase the dimensional strength of the valve insert (18, 18') when the valve body (19) is pressed in.

13. Valve cartridge according to one of Claims 1 to 11, **characterized in that** the joints of the valve insert (18, 18') which is embodied as a slotted sleeve are connected to one another at least at the second end of the valve insert (18, 18') in order to increase the dimensional strength of the valve insert (18, 18') when the valve body (19) is pressed in.

14. Valve cartridge according to Claim 13, **characterized in that** the joints of the valve insert (18, 18') which is embodied as a slotted sleeve are connected to one another by welding and/or bonding and/or an interlocking connection.

15. Solenoid valve, **characterized by** a valve cartridge (12) according to one of Claims 1 to 14.

16. Method for producing the valve insert (18, 18') of the valve cartridge (12) according to the present Claim 1, **characterized in that** the valve insert (18, 18') is produced by rolling a strip of sheet metal as a single-component sleeve which is slotted over its entire axial length.

17. Method according to Claim 16, **characterized in that** a later form of an inner drill hole (18.4) of the valve insert (18, 18') is formed in a corresponding surface of the strip of sheet metal before the rolling in process.

## Revendications

1. Cartouche (12) pour électrovanne comprenant une capsule (12.1), une armature magnétique (14) guidée de manière mobile à l'intérieur de la capsule (12.1), un insert d'électrovanne (18, 18') qui est enfoncé avec une première extrémité dans la capsule (12.1), et un corps d'électrovanne (19) avec un siège d'électrovanne principal (19.1), l'armature magnétique (14) déplacée par une force magnétique produite déplaçant un poussoir (16) guidé à l'intérieur de l'insert d'électrovanne (18, 18'), lequel poussoir présente un élément de fermeture (16.1) avec un élément d'étanchéité (16.2), et l'élément d'étanchéité (16.2) plongeant hermétiquement dans le siège d'électrovanne principal (19.1) du corps d'électrovanne (19) pour effectuer une fonction d'étanchéité, **caractérisée en ce que** l'insert d'électrovanne (18, 18') est réalisé sous forme de douille d'une seule pièce fendue sur toute sa longueur axiale, et le corps de soupape (19) est réalisé sous forme de douille en forme de calotte, le corps d'électrovanne (19) réalisé sous forme de douille étant pressé dans une deuxième extrémité de l'insert d'électrovanne (18, 18') réalisé sous forme de douille fendue de telle sorte que le siège d'électrovanne principal (19.1) soit disposé à l'intérieur de l'insert d'électrovanne (18, 18').

2. Cartouche pour électrovanne selon la revendication 1, **caractérisée en ce que** la capsule (12.1) est réalisée sous forme de composant d'électrovanne réalisant l'étanchéité vis-à-vis de l'atmosphère et peut être matée par le biais d'une douille de matage (18.1) au niveau d'une région de matage (41) avec un bloc à fluide (40).

3. Cartouche pour électrovanne selon la revendication 1 ou 2, **caractérisée en ce que** le corps d'électrovanne (19) est réalisé sous forme de pièce emboutie et est pressé au niveau d'une région de pressage (19.3) dans l'insert d'électrovanne (18, 18'), le siège d'électrovanne principal (19.1) étant désaccouplé de la région de pressage (19.3) dans le corps d'électrovanne (19) par le biais d'une région de désaccouplement (19.2).

4. Cartouche pour électrovanne selon l'une quelconque des revendications 1 à 3, **caractérisée en ce qu'**un ressort de rappel (17) du poussoir (16) est disposé en dehors de la région d'écoulement, le ressort de rappel (17) s'appuyant sur un appui à ressort (23, 23').

5. Cartouche pour électrovanne selon la revendication 4, **caractérisée en ce que** l'appui à ressort est réalisé sous forme de douille de serrage (23) qui est introduite dans l'insert d'électrovanne (18).

6. Cartouche pour électrovanne selon la revendication 4, **caractérisée en ce que** l'appui à ressort est réalisé sous forme de saillie (23') façonnée, qui rétrécit un diamètre actif de l'alésage intérieur (18.4) de l'insert d'électrovanne (18').

7. Cartouche pour électrovanne selon l'une quelconque des revendications 1 à 6, **caractérisée en ce qu'**une partie inférieure d'électrovanne (20) est placée et supportée axialement contre l'insert d'électrovanne (18, 18'), la partie inférieure d'électrovanne (20) étant enfoncée par le biais d'un mandrin de manière hermétique dans un espace intérieur du corps d'électrovanne (19) et réalisant l'étanchéité vis-à-vis du bloc à fluide périphérique (40) avec le contour extérieur.

8. Cartouche pour électrovanne selon l'une quelconque des revendications 1 à 7, **caractérisée en ce qu'**une course maximale du poussoir (16) peut être ajustée par un déplacement axial de l'insert d'électrovanne (18, 18') à l'intérieur de la capsule (12.1).

9. Cartouche pour électrovanne selon l'une quelconque des revendications 1 à 8, **caractérisée en ce qu'**un entrefer minimal (15) entre l'armature (14) et l'insert d'électrovanne (18, 18') peut être ajusté par déplacement axial du corps d'électrovanne (19) à l'intérieur de l'insert d'électrovanne (18, 18') avec l'armature introduite (14).

10. Cartouche pour électrovanne selon la revendication 9, **caractérisée en ce que** l'entrefer ajusté (15) est fixé par une connexion par sertissage (21) entre la capsule (12.1) et l'insert d'électrovanne (18, 18').

11. Cartouche pour électrovanne selon la revendication 10, **caractérisée en ce que** l'insert d'électrovanne (18, 18') est réalisé avec une rainure périphérique (18.3) pour la réalisation de la connexion par sertissage (21).

12. Cartouche pour électrovanne selon l'une quelconque des revendications 1 à 11, **caractérisée en ce qu'**une bague de renforcement (22) est pressée autour de la deuxième extrémité de l'insert d'électrovanne (18, 18'), afin d'augmenter la tenue de forme de l'insert d'électrovanne (18, 18') lors du pressage du corps d'électrovanne (19).

13. Cartouche pour électrovanne selon l'une quelconque des revendications 1 à 11, **caractérisée en ce que** les bords de l'insert d'électrovanne (18, 18') réalisé sous forme de douille fendue sont connectés l'un à l'autre au moins à la deuxième extrémité de l'insert d'électrovanne (18, 18'), afin d'augmenter la tenue de forme de l'insert d'électrovanne (18, 18') lors du pressage du corps d'électrovanne (19).

14. Cartouche pour électrovanne selon la revendication 13, **caractérisée en ce que** les bords de l'insert d'électrovanne (18, 18') réalisé sous forme de douille fendue sont connectés l'un à l'autre par soudage et/ou collage et/ou engrènement.

15. Electrovanne **caractérisée par** une cartouche (12) pour électrovanne selon l'une quelconque des revendications 1 à 14.

16. Procédé de fabrication de l'insert d'électrovanne (18, 18') de la cartouche (12) pour électrovanne selon la revendication 1 précédente, **caractérisé en ce que** l'insert d'électrovanne (18, 18') est fabriqué par enroulement d'une bande de tôle sous forme de douille d'une seule pièce fendue sur toute sa longueur axiale.

17. Procédé selon la revendication 16, **caractérisé en ce qu'**une forme ultérieure d'un alésage intérieur (18.4) de l'insert d'électrovanne (18, 18') est pratiquée avant l'enroulement dans une surface correspondante de la bande de tôle.
